(19) Europäisches Patentamt
European Patent Office
Office européen des brevets

(11) Veröffentlichungsnummer: **0 234 223 B1**

(12) # EUROPÄISCHE PATENTSCHRIFT

(45) Veröffentlichungstag der Patentschrift: **07.04.93**

(51) Int. Cl.[5]: **C08G 65/40**, C08G 81/00

(21) Anmeldenummer: **87100437.0**

(22) Anmeldetag: **15.01.87**

Die Akte enthält technische Angaben, die nach dem Eingang der Anmeldung eingereicht wurden und die nicht in dieser Patentschrift enthalten sind.

(54) **Verfahren zur Herstellung von aromatischen Block-Copolyethern.**

(30) Priorität: **24.01.86 DE 3602090**

(43) Veröffentlichungstag der Anmeldung:
**02.09.87 Patentblatt 87/36**

(45) Bekanntmachung des Hinweises auf die Patenterteilung:
**07.04.93 Patentblatt 93/14**

(84) Benannte Vertragsstaaten:
**BE DE FR GB IT NL**

(56) Entgegenhaltungen:
**EP-A- 0 000 361**
**EP-A- 0 030 033**
**EP-A- 0 038 028**
**DE-A- 2 637 403**

(73) Patentinhaber: **BASF Aktiengesellschaft**
**Carl-Bosch-Strasse 38**
**W-6700 Ludwigshafen(DE)**

(72) Erfinder: **Ittemann, Peter, Dr.**
**Wilhelm Busch-Strasse 87**
**W-6700 Ludwigshafen(DE)**
Erfinder: **Heinz, Gerhard, Dr.**
**Im Vogelsang 2**
**W-6719 Weisenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die Erfindung betrifft ein Verfahren zur Herstellung von Block-Copolyethern, insbesondere von Ketogruppen enthaltenden Polyethersulfonen. Polymere mit Sulfon- und Ethergruppen finden wegen ihrer guten Hochtemperaturbeständigkeit bei der Herstellung von technischen Artikeln steigendes Interesse. Sie werden bevorzugt durch Polykondensation von Bisphenolen mit Sulfongruppen enthaltenden Dichloraromaten in Gegenwart von polaren Lösungsmitteln und wasserfreiem Kaliumcarbonat hergestellt. Dabei ist die Verwendung von N-Methylpyrrolidon als Lösungsmittel nach der EP-B-361 besonders günstig, weil darin bei verhältnismäßig niedrigen Temperaturen um 170 - 200 °C gearbeitet werden kann. Diese amorphen Polyethersulfone haben jedoch den Nachteil, daß sie gegenüber der Einwirkung von Säuren und Alkalien, insbesondere aber auch gegenüber vielen organischen Lösungsmitteln empfindlich sind und zu Spannungsrißkorrosion neigen. Diesen Nachteil weisen die teilkristallinen Polyetherketone nicht auf, die z.B. nach der EP-B-1879 durch Polykondensation von Bisphenolen mit Ketogruppen enthaltenden Difluoraromaten in Gegenwart von polaren Lösungsmitteln und Kaliumcarbonat hergestellt werden. Dabei müssen jedoch Sulfongruppen enthaltende Lösungsmittel verwendet werden, was die Anwendung sehr hoher Temperaturen bedingt, und somit Neben- und Zersetzungsreaktionen ermöglicht. Ferner schmelzen die Polyetherketone erst bei verhältnismäßig hohen Temperaturen oberhalb von 320 °C und neigen deshalb zu Abbaureaktionen bei der thermoplastischen Verarbeitung.

Bei dem Verfahren gemäß DE-A 26 37 403 wird ein feinteiliges Polyetherketon in einem Lösungsmittel suspendiert, bei einer Temperatur, bei der es sich nicht löst. Die Reaktion läuft demgemäß in heterogener Phase ab. Dies bedeutet, daß die Reaktionsgeschwindigkeit sehr stark abhängig ist von der aktiven Oberfläche der Teilchen, d.h. von der Teilchengröße. Darüber hinaus unterliegt auch bei sehr kleinen Teilchen die Umsetzung der Diffusionskontrolle und führt daher niemals zu einheitlichen Blockcopolymeren. Um das Verfahren einigermaßen reproduzierbar durchzuführen, ist es aber auf jeden Fall notwendig, immer Polyetherketon-Teilchen mit identischer Teilchengröße einzusetzen. Dazu sind aufwendige Trennvorgänge, z.B. durch Sieben oder sonstige Klassierverfahren, notwendig.

Das in der DE-A-26 37 403 beschriebene Verfahren benötigt Temperaturen von über 250 °C - 300 °C (s. Seite 6, 7 und Beispiele). Wie auf den Seiten 6 und 7 sowie im letzten Abschnitt des Beispiels 1 ausgeführt wird, ist es jedoch wahrscheinlich, daß bei diesen Temperaturen das Polyetherketon durch Phenolat-Ionen gespalten wird, wodurch sich letztendlich statistische Copolymere bilden, die nicht erwünscht sind. Die Temperaturführung bei diesem Verfahren ist deshalb sehr schwierig. Ist die Temperatur zu niedrig, erfolgt keine Anbindung des Polyethersulfon-Blocks an den Polyetherketon-Block; ist die Temperatur zu hoch, wird der Polyetherketon-Block zersetzt.

In der EP-A-30 033 wird in Beispiel 6 ebenfalls ein Verfahren zur Herstellung von Blockcopolymeren mit Polyetherketon- und Polyethersulfon-Blöcken beschrieben. Das angegebene Verfahren beschränkt sich jedoch auf Polyethersulfone der Struktur

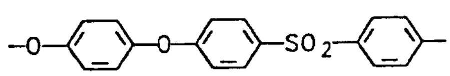

d.h., Blockcopolymere mit Polyethersulfon-Blöcken der Struktur

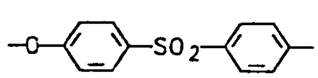

sind nicht beschrieben.

Wie aus Beispiel 1 der EP-A-30 033 hervorgeht, ist es zur Aufarbeitung des Reaktionsansatzes notwendig, diesen durch Abkühlen zu verfestigen, zu pulverisieren und dann zu extrahieren. Obwohl in dem beschriebenen Beispiel Sulfolan als Lösungsmittel eingesetzt wurde, das bereits knapp oberhalb Raumtemperatur flüssig wird, wird das Reaktionsgemisch beim Abkühlen fest. Daraus kann man schließen, daß die gebildeten Blockcopolymeren in Sulfolan bei Temperaturen unterhalb der Reaktionstemperatur nicht löslich sind und deshalb das Reaktionsgemisch beim Abkühlen durch Kristallisation der Blockcopolymeren verfestigt wird.

Schließlich ist bekannt, daß N-Methylpyrrolidon für amorphe Polyarylether ein sehr gutes Lösungsmittel ist, daß sich jedoch hochmolekulare teilkristalline Polyaryletherketone in diesem Lösungsmittel nicht lösen

und deshalb nicht herstellen lassen. In der EP 1879 wird beispielsweise gelehrt, daß zur Herstellung von teilkristallinen Polyetherketonen immer sulfonhaltige Lösungsmittel und Temperaturen über 250 °C notwendig sind.

Der Erfindung lag die Aufgabe zugrunde, aromatische Polyether herzustellen, die einerseits eine gute Lösungsmittelbeständigkeit und damit geringe Spannungsrißbildung aufweisen, und die andererseits auch bei erhöhten Temperaturen noch über eine ausreichende Festigkeit verfügen. Die Polymeren sollten ferner eine geringe Eigenfarbe haben.

Diese Aufgabe wird gelöst durch das erfindungsgemäße Verfahren zur Herstellung von teilkristallinen Blockcopolyethern, die Sulfon- und Keto-Gruppen enthalten, wobei man in einer ersten Stufe durch Umsetzung von

A 1) Bisphenol A,
Bis-(4-hydroxyphenyl)-sulfon,
2,4'-Dihydroxydiphenylsulfon,
oder 4,4'-Dihydroxy-diphenyl

mit

A 2) Bis-(4-chlorphenyl)-sulfon
oder Bis-(4-fluorphenyl)-sulfon

in Gegenwart von Alkalimetallcarbonat in N-Methylpyrrolidon als Lösungsmittel Polyethersulfonblöcke A mit einem Molekulargewicht Mn von 1.500 bis 30.000 herstellt und in einer zweiten Stufe an die lebenden Kettenenden der Blöcke A Polyetherketonblöcke B dadurch anpolymerisiert, daß man

B 1) Hydrochinon

und

B 2) 4,4'-Difluorbenzophenon
oder Bis-(4-fluorbenzoyl)-benzol,

zusetzt, mit der Maßgabe, daß das molare Verhältnis der Monomeren A2:B2 zwischen 65:35 und 40:60 beträgt.

Im Gegensatz zu den sonst üblichen Verfahren zur Herstellung von Copolyethern werden hier die Dihalogenverbindungen nicht vorgemischt, sondern es wird zuerst ein Polysulfonblock mit einem definierten Molekulargewicht gebildet, der im wesentlichen frei von Hydrochinoneinheiten ist, und erst dann werden die Monomeren, die den Polyketonblock bilden, zugesetzt. Die Polykondensation wird in N-Methylpyrrolidon als Lösungsmittel bei verhältnismäßig niedrigen Temperaturen von 130 bis 220 °C, vorzugsweise von 150 bis 210 °C durchgeführt werden. Grundsätzlich ist es auch möglich, entsprechende Drei- oder Vierblockcopolymere herzustellen.

Das bevorzugte Molverhältnis der Monomeren A2:B2 liegt zwischen 65:35 und 50:50.

Die Einhaltung der Gesamtstöchiometrie wird durch einen geringen Überschuß der entsprechenden Komponente B1 oder B2 gewährleistet, der sich aus der Blocklänge des ersten Blocks und dem molaren Verhältnis A2:B2 errechnet.

Das molare Verhältnis der Summen der Dihalogenverbindungen und der Bisphenole liegt vorzugsweise zwischen 49:51 und 51:49.

Zur Erzielung hoher Molmassen kann der Einsatz eines leichten Überschusses, bis zu 10 Mol % der Summen der Dihalogenverbindungen, bezogen auf die Summe der Bisphenole, von Vorteil sein.

Als wasserfreie Alkalikarbonate kommen beispielsweise Natrium- und vorzugsweise Kaliumkarbonat oder deren Mischungen in Betracht.

Gegebenenfalls kann es von Vorteil sein, die Reaktionstemperatur mit fortschreitender Kondensation innerhalb der angegebenen Grenzen zu erhöhen.

Das Reaktionsgemisch der ersten Stufe wird solange im genannten Temperaturbereich polykondensiert, bis der erforderliche Kondensationsgrad erreicht ist. Die Polykondensationszeit kann je nach Art der Ausgangskomponenten und gewählten Reaktionsbedingungen 0.1 bis 15 Stunden betragen.

Für den zweiten Reaktionsschritt, die Anpolymerisation der neu hinzugegebenen Monomeren an die lebenden Polymerblöcke, gilt das Gleiche.

Als Endgruppen für die Polykondensate eignen sich alle chemisch inerten Gruppen. Zum Einbau der Endgruppen wird dem Polykondensationsgemisch zweckmäßigerweise nach Erreichen des gewünschten Polykondensationsgrades eine entsprechende Verbindung in einer geringen Menge zugesetzt. Vorzugsweise verwendet werden aliphatische und aromatische Halogenverbindungen, insbesondere Methylchlorid oder die oben genannten Dihalogenbenzolverbindungen.

Die anorganischen Bestandteile, beispielsweise Natriumchlorid, Kaliumchlorid, Natriumfluorid und/oder Kaliumfluorid, können vor oder nach Isolierung des Polyethers durch geeignete Methoden, wie Lösen und Filtrieren, Sieben oder Extrahieren, entfernt werden.

Das entstandene Wasser kann mit Hilfe eines Azeotropbildners oder Anlegen eines Unterdruckes in beiden Reaktionsstufen entfernt werden, vorzugsweise wird es jedoch durch Einleiten eines kräftigen Stickstoffstromes überdestilliert. Geeignete Wasser-Azeotropbildner sind alle Substanzen, die im Bereich der Reaktionstemperatur bei Normaldruck sieden und sich mit dem Reaktionsgemisch homogen mischen lassen, ohne chemische Reaktionen einzugehen. Als Azeotropbildner der genannten Art seien beispielsweise genannt: Chlorbenzol, Toluol und Xylol. Bevorzugt zur Anwendung gelangt Chlorbenzol.

Das Lösungsmittel N-Methylpyrrolidon wird in Mengen von 5 bis 100, vorzugsweise von 5 bis 20 Molen, bezogen auf ein Mol Bisphenol oder Dihalogenbenzolverbindung, verwendet. Dies bedeutet, daß die Reaktionslösungen in Abwesenheit von Alkalikarbonat und Azeotropbildner einen Feststoffgehalt von 5 bis 50 Gew. %, vorzugsweise von 10 bis 40 Gew. %, bezogen auf das Gesamtgewicht, aufweisen.

Die Isolierung des Polyethers schließlich kann auf verschiedene Weise durchgeführt werden. Eine Abscheidung des festen Polymeren kann durch Mischen der Reaktionslösung mit einem Fällungsmittel, z.B. Wasser und/oder Methanol, durch starkes Rühren, Verspritzen oder Verdüsen geschehen. Andererseits kann das Lösungsmittel auch verdampft werden. Die anorganischen Bestandteile können durch geeignete Methoden, wie Lösen, Filtrieren oder Sieben aus dem Polyether entfernt werden.

Die mit Hilfe des erfindungsgemäßen Verfahrens hergestellten Blockcopolyether besitzen reduzierte Viskositäten (gemessen bei 25° C in 1 %-Lösung in 4-Chlorphenol/1,2-Dichlorbenzol 3/2) von 0,4 bis 2,5 dl/g vorzugsweise von 0,6 bis 1,5 dl/g.

Die hergestellten Blockcopolymere sind vorzüglich zur Herstellung von Formkörpern, Fasern, Folien, Kleb- und Beschichtungsstoffen geeignet. Sie können übliche Zusatzstoffe, z.B. Glas-, Kohlenstoff- oder Aramid-Fasern, Füllstoffe, Farbstoffe und Pigmente zugemischt enthalten.

Bei hohen Etherketongehalten (35 - 60 Mol % je nach Monomeren) in den Blockcopolymeren erreichen diese durch Tempern eine Teilkristallinität, die bei statistischen Sulfon/Etherketon-Copolymeren unter den gleichen Bedingungen erst bei wesentlich höheren Etherketongehalten auftritt. Bedingt durch diese Teilkristallinität weisen die nunmehr opak aussehenden Blockcopolymeren auch noch oberhalb ihrer Glastemperatur eine mechanische Festigkeit auf, die bei kurzzeitiger Temperaturbelastung eine Formveränderung eines Formkörpers verhindert.

Daß es sich bei den erfindungsgemäß hergestellten Polymeren um echte Blockcopolymere und nicht, wie eventuell zu vermuten wäre, um Mischungen von Polysulfonen und Polyetherketonen handelt, konnte durch Extraktionsversuche mit geeigneten Lösungsmitteln und Feststellen des Schwefel-Anteils der Polymeren im Filtrat und im Rückstand bewiesen werden.

Die Erfindung wird durch die nachfolgenden Beispiele und Vergleichsbeispiele näher erläutert. Die genannten Teile sind Gewichtsteile. Die reduzierten Viskositäten ($\eta_{red}$) wurden bei 25° C in 1 %iger Lösung in 4-Chlorphenol/1,2-Dichlorbenzol 3/2 gemessen und entsprechend der Formel

$$\eta_{red} = \frac{\eta_{spez}}{C}$$

umgerechnet.

Beispiel 1

86.2 Teile Bis-(4-chlorphenyl)-sulfon, 70.5 Teile 2,2-Bis-(4-hydroxyphenyl)-propan und 47.0 Teile Kaliumkarbonat werden mit 350 Teilen N-Methylpyrrolidon und 50 Teilen Chlorbenzol versetzt. Das Reaktionsgemisch wird unter ständigem Rühren und Durchleiten von Stickstoff auf 170° C erhitzt und das entstehende Reaktionswasser mit Hilfe eines Wasserabscheiders 3 Stunden lang bei dieser Temperatur entfernt. Anschließend wird die Temperatur auf 185° C gesteigert und 4 Stunden bei dieser Temperatur gerührt.

Nach dem Abkühlen des Reaktionsgemischs werden 44.2 Teile 4,4'-Difluorbenzophenon, 19.8 Teile Hydrochinon, 27.4 Teile Kaliumkarbonat und 320 Teile N-Methylpyrrolidon zugegeben. Unter ständigem Durchleiten von Stickstoff wird auf 150° C erhitzt und nach 1 Stunde die Temperatur auf 185° C gesteigert. Das Reaktionsgemisch wird 6 Stunden bei dieser Temperatur gehalten. Durch 30-minütiges Einleiten eines Methylchlorid-Stromes wird die Polykondensation abgebrochen. Das Polymere wird in Wasser ausgefällt und die anorganischen Bestandteile durch mehrmaliges Waschen mit Wasser entfernt. Das erhaltene Polymere wird 12 Stunden bei 18° C im Vakuum getrocknet. Es besitzt eine reduzierte Viskosität von $\eta_{red}$ = 1.14 dl/g.

Beispiel 2

57.4 Teile Bis-(4-chlorphenyl)-sulfon, 47.0 Teile 2,2-Bis-(4-hydroxyphenyl)-propan und 31.3 Teile Kaliumkarbonat werden mit 330 Teilen N-Methylpyrrolidon versetzt. Das Reaktionsgemisch wird unter ständigem Rühren auf 170°C erhitzt und das entstehende Reaktionswasser 4 Stunden lang bei dieser Temperatur durch einen starken Stickstoffstrom in einen Wasserabscheider übergetrieben. Anschließend wird die Temperatur auf 185°C gesteigert und 4 Stunden bei dieser Temperatur gerührt.

Nach dem Abkühlen des Reaktionsgemischs werden 48.0 Teile 4,4'-Difluorbenzophenon, 22.0 Teile Hydrochinon, 30.4 Teile Kaliumkarbonat und 330 Teile N-Methylpyrrolidon zugegeben. Unter ständigem Durchleiten von Stickstoff wird auf 150°C erhitzt und nach 1 Stunde die Temperatur auf 185°C gesteigert. Das Reaktionsgemisch wird 7 Stunden bei dieser Temperatur gehalten. Durch 30-minütiges Einleiten eines Methylchlorid-Stromes wird die Polykondensation abgebrochen. Das Polymere wird in Wasser/Methanol 1/1 ausgefällt und zur Entfernung der anorganischen Bestandteile mehrmals mit Wasser gewaschen und dann 12 h bei 100°C im Vakuum getrocknet. Es besitzt eine reduzierte Viskosität von $\eta_{red}$ = 1.11 dl/g.

Beispiel 3

57.4 Teile Bis-(4-chlorphenyl)-sulfon, 47.9 Teile 2,2-Bis-(4-hydroxyphenyl)-propan und 31.9 Teile Kaliumkarbonat werden mit 175 Teilen N-Methylpyrrolidon und 50 Teilen Chlorbenzol versetzt. Das Reaktionsgemisch wird unter ständigem Rühren und Durchleiten von Stickstoff auf 170°C erhitzt und das entstehende Reaktionswasser mit Hilfe eines Wasserabscheiders 3 Stunden lang bei dieser Temperatur entfernt. Anschließend wird die Temperatur auf 185°C gesteigert und 3 Stunden bei dieser Temperatur gerührt.

Nach dem Abkühlen des Reaktonsgemischs werden 48.1 Teile 4,4'-Difluorbenzophenon, 22.0 Teile Hydrochinon, 30.4 Teile Kaliumkarbonat und 325 Teile N-Methylpyrrolidon zugegeben. Unter ständigem Durchleiten von Stickstoff wird auf 150°C erhitzt und nach 1 Stunde die Temperatur auf 180°C gesteigert. Das Reaktionsgemisch wird 6 Stunden bei dieser Temperatur gehalten. Durch 30-minütiges Einleiten eines Methylchlorid-Stromes wird die Polykondensation abgebrochen. Das Polymere wird in Wasser ausgefällt und zur Entfernung der anorganischen Bestandteile mehrmals mit Wasser gewaschen. Nach 12 stündigem Trocknen bei 100°C im Vakuum besitzt das Copolymere eine reduzierte Viskosität von $\eta_{red}$ = 1.29 dl/g.

Beispiel 4

57.4 Teile Bis-(4-chlorphenyl)-sulfon, 50.2 Teile 2,2-Bis-(4-hydroxyphenyl)-propan und 33.5 Teile Kaliumkarbonat werden mit 175 Teilen N-Methylpyrrolidon und 50 Teilen Chlorbenzol versetzt. Das Reaktionsgemisch wird unter ständigem Rühren und Durchleiten von Stickstoff auf 170°C erhitzt und das entstehende Reaktionswasser mit Hilfe eines Wasserabscheiders 3 Stunden lang bei dieser Temperatur entfernt. Anschließend wird die Temperatur auf 185°C gesteigert und 4 Stunden bei dieser Temperatur gerührt.

Nach dem Abkühlen des Reaktionsgemischs werden 49.8 Teile 4,4'-Difluorbenzophenon, 22.0 Teile Hydrochinon, 30.4 Teile Kaliumkarbonat und 325 Teile N-Methylpyrrolidon zugegeben. Unter ständigem Durchleiten von Stickstoff wird auf 150°C erhitzt und nach 1 Stunde die Temperatur auf 185°C gesteigert. Das Reaktionsgemisch wird 6 Stunden bei dieser Temperatur gehalten. Durch 30-minütiges Einleiten eines Methylchlorid-Stromes wird die Polykondensation abgebrochen. Das Polymere wird in Wasser ausgefällt und die anorganischen Bestandteile durch mehrmaliges Waschen mit Wasser entfernt. Das erhaltene Polymere wird 12 Stunden bei 80°C im Vakuum getrocknet. Es besitzt eine reduzierte Viskosität von $\eta_{red}$ = 1.10 dl/g.

Beispiel 5

57.4 Teile Bis-(4-chlorphenyl)-sulfon, 47.0 Teile 2,2-Bis-(4-hydroxyphenyl)-propan und 31.3 Teile Kaliumkarbonat werden mit 200 Teilen N-Methylpyrrolidon und 50 Teilen Chlorbenzol versetzt. Das Reaktionsgemisch wird unter ständigem Rühren und Durchleiten von Stickstoff auf 170°C erhitzt und das entstehende Reaktionswasser mit Hilfe eines Wasserabscheiders 3 Stunden lang bei dieser Temperatur entfernt. Anschließend wird die Temperatur auf 185°C gesteigert und 4 Stunden bei dieser Temperatur gerührt.

Nach dem Abkühlen des Reaktionsgemisches werden 64.0 Teile 4,4'-Difluorbenzophenon, 30.0 Teile Hydrochinon, 41.5 Teile Kaliumkarbonat und 450 Teile N-Methylpyrrolidon zugegeben. Unter ständigem Durchleiten von Stickstoff wird auf 150°C erhitzt und nach 1 Stunde die Temperatur auf 185°C gesteigert. Das Reaktionsgemisch wird 6 Stunden bei dieser Temperatur gehalten. Durch 30-minütiges Einleiten eines Methylchorid-Stromes wird die Polykondensation abgebrochen. Das Polymere wird in Wasser ausgefällt und

die anorganischen Bestandteile durch mehrmaliges Waschen mit Wasser entfernt. Das erhaltene Polymere wird 12 Stunden bei 80 ° C im Vakuum getrocknet. Es besitzt eine reduzierte Viskosität von $\eta_{red}$ = 0.85 dl/g.

Beispiel 6

57.4 Teile Bis-(4-chlorphenyl)-sulfon, 51.6 Teile Bis-(4-hydroxyphenyl)-sulfon und 31.3 Teile Kaliumkarbonat werden mit 175 Teilen N-Methylpyrrolidon und 50 Teilen Chlorbenzol versetzt. Das Reaktionsgemisch wird unter ständigem Rühren und Durchleiten von Stickstoff auf 170 ° C erhitzt und das entstehende Reaktionswasser mit Hilfe eines Wasserabscheiders 4 Stunden lang bei dieser Temperatur entfernt. Anschließend wird die Temperatur auf 185 ° C gesteigert und 4 Stunden bei dieser Temperatur gerührt.

Nach dem Abkühlen des Reaktionsgemisches werden 28.2 Teile 4,4'-Difluorbenzophenon, 13.2 Teile Hydrochinon, 18.2 Teile Kaliumkarbonat und 325 Teile N-Methylpyrrolidon zugegeben. Unter ständigem Durchleiten von Stickstoff wird auf 150 ° C erhitzt und nach 1 Stunde die Temperatur auf 185 ° C gesteigert. Das Reaktionsgemisch wird 6 Stunden bei dieser Temperatur gehalten. Durch 30-minütiges Einleiten eines Methylchlorid-Stromes wird die Polykondensation abgebrochen. Das Polymere wird in Wasser ausgefällt und die anorganischen Bestandteile durch mehrmaliges Waschen mit Wasser entfernt. Das erhaltene Polymere wird 12 Stunden bei 80 ° C im Vakuum getrocknet. Es besitzt eine reduzierte Viskosität von $\eta_{red}$ = 1.08 dl/g.

Vergleichsbeispiel A (Polysulfon)

114.9 Teile Bis-(4-chlorphenyl)-sulfon und 91.3 Teile 2,2-Bis-(4-hydroxyphenyl)propan werden in 400 Teilen N-Methylpyrrolidon und 50 Teilen Chlorbenzol gelöst und mit 60.8 Teilen wasserfreiem Kaliumkarbonat versetzt. Das Reaktionsgemisch wird unter ständigem Abdestillieren eines Gemisches aus Wasser und Chlorbenzol innerhalb von zwei Stunden auf 150 ° C erhitzt. Anschließend wird die Temperatur auf 180 ° C gesteigert. Das Reaktionsgemisch wird dann 7 Stunden bei 180 ° C gehalten. Durch 30-minütiges Einleiten eines Methylchlorid-Stromes wird die Polykondensation abgebrochen. Die anorganischen Bestandteile werden abfiltriert, das Polymere in Wasser ausgefällt und 12 Stunden bei 80 ° C im Vakuum getrocknet. Es besitzt eine reduzierte Viskosität von $\eta_{red}$ = 0,85 dl/g, ist jedoch in Methylenchlorid, Aceton und Chlorbenzol weitgehend löslich und weist somit eine für viele Anwendungsfälle ungenügende Lösungsmittelbeständigkeit auf.

Vergleichsbeispiel B (Polyethersulfon)

Man verfährt wie in Vergleichsbeispiel A, ersetzt jedoch das 2,2-Bis-(4-hydroxyphenyl)-propan vollständig durch 100.1 Teile Bis-(4-hydroxyphenyl)-sulfon. Man erhält bereits nach 6 Stunden bei 180 ° C ein Hochpolymeres mit einer reduzierten Viskosität von $\eta_{red}$ = 0,60 dl/g, das jedoch in Methylenchlorid, Aceton und Chlorbenzol weitgehend löslich ist und somit eine für viele Anwendungsfälle ungenügende Lösungsmittelbeständigkeit aufweist.

Vergleichsbeispiel C (Polyetheretherketon)

218.2 Teile 4,4'-Difluorbenzophenon, 110.1 Teile Hydrochinon und 600 Teile Diphenylsulfon werden in einem Dreihalskolben, der mit Rührer, Stickstoffeinleitungsrohr und Rückflußkühler versehen ist, gegeben. Die Reaktionsmischung wird unter Rühren auf 180 ° C erhitzt und bildet eine fast farblose Lösung. Nach Zugabe von wasserfreiem Kaliumkarbonat (140 Teile) wird die Temperatur auf 200 ° C erhöht und 1 Stunde bei dieser Temperatur gehalten. Anschließend wird auf 250 ° C erhitzt und ebenfalls 1 Stunde bei dieser Temperatur gerührt; schließlich wird die Temperatur auf 320 ° C erhöht, wobei das Polymere in Lösung bleibt. Die Reaktionsmischung wird abgekühlt, der erhaltene Feststoff gemahlen und Diphenylsulfon und anorganische Salze durch mehrmaliges Waschen mit Aceton, Wasser und Aceton/Methanol abgetrennt. Das erhaltene feste, teilkristalline Polymer wird bei 140 ° C im Vakuum getrocknet und besitzt eine reduzierte Viskosität von $\eta_{red}$ 1.30 dl/g. Ein daraus durch Pressen bei 380 ° C hergestellter Film ist opak. Der Kristallschmelzpunkt liegt bei 334 ° C, die Glastemperatur bei ungefähr 140 ° C nach DSC-Messungen.

Vergleichsbeispiel D (statistisches Copolymeres)

86.2 Teile Bis-(4-chlorphenyl)-sulfon, 70.5 Teile 2,2-Bis-(4-hydroxyphenyl)-propan, 44.2 Teile 4,4'-Difluorbenzophenon, 19.8 Teile Hydrochinon und 74.4 Teile Kaliumkarbonat werden mit 500 Teilen N-Methylpyrrolidon und 50 Teilen Chlorbenzol versetzt. Das Reaktionsgemisch wird unter ständigem Rühren und Durchleiten von Stickstoff auf 170 ° C erhitzt und das entstehende Reaktionswasser mit Hilfe eines Wasserabscheiders 4 Stunden lang bei dieser Temperatur entfernt. Anschließend wird die Temperatur auf 185 ° C gesteigert und 8 Stunden bei dieser Temperatur gerührt. Durch 30-minütiges Einleiten eines Methylchlorid-Stromes wird die Polykondensation abgebrochen. Das Polymere wird in Wasser ausgefällt und die anorganischen Bestandteile durch mehrmaliges Waschen mit Wasser entfernt. Das erhaltene statistische Copolymere wird 12 Stunden bei 80 ° C im Vakuum getrocknet. Es besitzt eine reduzierte Viskosität von $\eta_{red}$ = 0.77 dl/g und ist in Methylenchlorid vollständig löslich.

Vergleichsbeispiel E

34.46 Teile Bis-(4-chlorphenyl)-sulfon, 14.09 Teile Hydrochinon und 21.23 Teile Kaliumkarbonat werden in 200 ml Sulfolan und 160 ml Toluol 1 Stunde bei Raumtemperatur unter Durchleiten eines Stickstoffstromes gerührt. Unter Abdestillieren des Toluols wird die Temperatur der Reaktionsmischung danach während 2 Stunden auf 180 ° C erhöht.

Nach Abkühlen auf Raumtemperatur werden 104,74 Teile 4,4'-Difluorbenzophenon, 51,97 Teile Hydrochinon, 78.28 Teile Kaliumkarbonat, 200 ml Toluol und 360 ml Sulfolan zugegeben und 30 Minuten unter Durchleiten eines Stickstoffstromes bei Raumtemperatur gerührt. Danach wird eine Stunde unter Rückfluß bei 140-150 ° C erhitzt und dann die Temperatur der Reaktionsmischung durch Abdestillieren des Toluols auf 225 ° C gesteigert. Frisches Toluol wird dabei tropfenweise zugegeben. Nach ca. 40 Minuten Reaktionszeit bei 225 ° C wird Methylchlorid in die Reaktionsmischung eingeleitet, die nach 15 Minuten schlagartig so hochviskos wird, daß sie nicht mehr gerührt werden kann.

Nach dem Erkalten wird der feste Kolbeninhalt fein zerkleinert und mit warmem Wasser 4 mal gewaschen. Beim letzten mal wird das Waschwasser mit Oxalsäure auf pH-Wert 2 eingestellt. Das erhaltene Polymere wird 24 Stunden bei 200 ° C im Vakuum getrocknet. Es weist eine reduzierte Viskosität von $_{red}$ = 1.05 dl/g, eine Glastemperatur von 163 ° C und eine Schmelztemperatur von 321 ° C nach DSC-Messungen auf. Das E-Modul beträgt 2700 N/qmm (bei 23 ° C), d.h. Formteile aus diesem Copolymeren weisen eine sehr niedrige Steifigkeit auf.

Tabelle

| Beispiel | Mol-Verhältnis A2/B2 | Blocklänge Sulfon | Tg°C | Tm°C | Rückstand bei Extraktion mit CH2Cl2 (%) | E-Modul ($N/mm^2$) |
|---|---|---|---|---|---|---|
| 1 | 59.7/40.3 | 15000 | 174 | 323 | 70 | 5100 |
| 2 | 47.6/52.4 | 15000 | 171 | 326 | 78 | |
| 3 | 47.6/52.4 | 9000 | 170 | 315 | 89 | |
| 4 | 46.7/53.3 | 4700 | 167 | 310 | 88 | |
| 5 | 40.6/59.4 | 15000 | 166 | 329 | 70 | |
| 6 | 60.7/39.3 | 15700 | 190 | - | 80 | |
| A | 100/0.0 | | 188 | - | 0 | |
| B | 100/0.0 | | 230 | - | 0 | |
| C | 0.0/100 | | 145 | 334 | 96 | |
| D | 59.6/40.4 | | | 159 | - | 0 |
| E | 20/80 | 5000 | 163 | 321 | 85 | 2700 |

## Patentansprüche

1. Verfahren zur Herstellung von teilkristallinen Blockcopolyethern, die Sulfon- und Keto-Gruppen enthalten, wobei man in einer ersten Stufe durch Umsetzung von

A 1) Bisphenol A,
Bis-(4-hydroxyphenyl)-sulfon,
2,4'-Dihydroxydiphenylsulfon,
oder 4,4'-Dihydroxy-diphenyl
mit
A 2) Bis-(4-chlorphenyl)-sulfon
oder Bis-(4-fluorphenyl)-sulfon,
in Gegenwart von Alkalimetallkarbonat in N-Methylpyrrolidon als Lösungsmittel Polyethersulfonblöcke A mit einem Molekulargewicht Mn von 1.500 bis 30.000 herstellt, in einer zweiten Stufe an die lebenden Kettenenden der Blöcke A Polyetherketonblöcke B dadurch anpolymerisiert, daß
B 1) Hydrochinon
und
B 2) 4,4'-Difluorbenzophenon
oder Bis-(4-fluorbenzoyl)-benzol,
zugesetzt werden mit der Maßgabe, daß das molare Verhältnis der Monomeren A 2 : B 2 zwischen 65:35 und 40:60 beträgt.

## Claims

**1.** A process for the preparation of a partially crystalline block copolyether which contains sulfonyl and keto groups, wherein, in a first stage, polyethersulfone blocks A having a molecular weight Mn of from 1,500 to 30,000 are prepared by reacting
A 1) bisphenol A,
bis-(4-hydroxyphenyl) sulfone,
2,4'-dihydroxydiphenyl sulfone
or 4,4'-dihydroxydiphenyl
with
A 2) bis-(4-chlorophenyl) sulfone
or bis-(4-fluorophenyl) sulfone,
in the presence of an alkali metal carbonate in N-methylpyrrolidone as a solvent and, in a second stage, polyetherketone blocks B are polymerized onto the living chain ends of blocks A by adding
B 1) hydroquinone
and
B 2) 4,4'-difluorobenzophenone
or bis-(-4-fluorobenzoyl)-benzene,
with the proviso that the molar ratio of monomer A 2 to monomer B 2 is from 65:35 to 40:60.

## Revendications

**1.** Procédé de préparation de copolyéthers séquencés partiellement cristallins qui contiennent des groupements sulfone et céto, dans lequel, dans une première étape, on prépare des blocs de polyéthersulfone A ayant un poids moléculaire Mn de 1500 à 30 000, par réaction
A 1) de bisphénol A,
de bis-(4-hydroxyphényl)-sulfone,
de 2,4'-dihydroxydiphénylsulfone ou
de 4,4'-dihydroxydiphényle
avec
A 1) de la bis-(4-chlorophényl)-sulfone ou
de la bis-(4-fluorophényl)-sulfone
en présence de carbonate de métal alcalin dans de la N-méthylpyrrolidone servant de solvant, et, dans une seconde étape, on fixe par polymérisation, aux extrémités de chaîne vivantes des blocs A, des blocs de polyéthercétone B en ajoutant
B 1) de l'hydroquinone
et
B 2) de la 4,4'-difluorobenzophénone ou
du bis-(4-fluorobenzoyl)-benzène,
étant spécifié que le rapport molaire des monomères A 2 : B 2 est compris entre 65:35 et 40:60.